# EUROPÄISCHE PATENTANMELDUNG

(11) **EP 0 961 043 A2**
(43) Veröffentlichungstag der Anmeldung: **01.12.1999**
(21) Anmeldenummer: 99110031.4
(22) Anmeldetag: 21.05.1999
(51) Int. Cl.: F16C 13/00

(54) **Biegeeinstellwalze**

(30) Priorität: 26.05.1998 DE 19823407
(71) Anmelder: Voith Sulzer Papiertechnik Patent GmbH, 89522 Heidenheim (DE)
(72) Erfinder: van Haag, Rolf Dr.-Ing., 47647 Kerken (DE)
(74) Vertreter: Knoblauch, Ulrich, Dr.-Ing.

(57) **Zusammenfassung**

Eine Biegeeinstellwalze besitzt einen in Außenlagern (7) drehfest gehaltenen Träger, der einen drehbaren Walzenmantel durchsetzt. Die Außenlager (7) sind durch Stellelemente (8) von hydraulischen Kolben-Zylinder-Einheiten (9) in Richtung auf eine Gegenwalze drückbar. Zwischen Stellelement (8) und Außenlager (7) ist eine Lagerfläche (12) vorgesehen. Dieser liegt mindestens eine Tasche (13) mit einem ringsum laufenden Rand (14) gegenüber. Die Tasche (13) ist über eine Drosselstelle (16) mit einer Taschen-Druckmittelquelle (17) und über den zwischen Lagerfläche (12) und Rand (14) verbleibenden Spalt (15) mit einem Ablauf (18) verbunden. Auf diese Weise ergibt sich eine selbsttätige und genaue Nachregelung der Außenlagerkräfte.

## Beschreibung

Die Erfindung bezieht sich auf eine Biegeeinstellwalze, mit einem in Außenlagern drehfest gehaltenen Träger, der einen drehbaren Walzenmantel durchsetzt und diesen unter Zwischenschaltung von hydrostatischen Stützvorrichtungen und gegebenenfalls an den Mantelenden angeordneten Innenlagern abstützt, wobei die Außenlager durch die Stellelemente von hydraulischen KolbenZylinder-Einheiten in Richtung auf eine Gegenwalze drückbar sind.

Eine solche Biegeeinstellwalze ist aus DE 25 10 410 C3 bekannt. Eine Steuervorrichtung wirkt auf Druckregelventile in den Zuleitungen zu den hydrostatischen Stützvorrichtungen und zu den Kolben-Zylinder-Einheiten. Bei einer Veränderung der Streckenlast mit Hilfe der hydrostatischen Stützelemente müssen auch die Lagerkräfte in den Außenlagern mit Hilfe der hydraulischen Kolben-Zylinder-Einheiten nachgeregelt werden. Die Nachregelung ist gering, sie liegt normalerweise im Bereich von 0 bis 10 % der aufgebrachten Streckenlast. Die unvermeidbare Reibung zwischen Kolben und Zylinder führt bei den Außenlagern dazu, daß eine feinfühlige Druckgebung nicht oder nur sehr aufwendig zu realisieren ist.

Aus DE 39 09 911 C1 ist eine Meßvorrichtung zum Erfassen der Lagerbelastung eines Innenlagers zwischen dem Walzenmantel und dem Träger einer Biegeeinstellwalze bekannt. Auf einander gegenüberliegenden Seiten der Lagerachse sind in mindestens einer Lagerfläche Druckmittel-Taschen vorgesehen, die über eine Drosselstelle mit Druckmittel versorgt werden, das über den zwischen den Lagerflächen gebildeten Spalt zu einem Ablauf geführt wird. Die in den Taschen herrschenden Drücke bilden dann Sensor-Meßwerte.

Der Erfindung liegt die Aufgabe zugrunde, bei einer Biegeeinstellwalze die Nachregelung der Lagerkräfte zu vereinfachen und zu verbessern.

Diese Aufgabe wird ausgehend von der eingangs beschriebenen Biegeeinstellwalze erfindungsgemäß dadurch gelöst, daß zwischen Stellelement und Außenlager eine Lagerfläche vorgesehen ist und dieser mindestens eine Tasche mit einem ringsum laufenden Rand gegenüber liegt und daß die Tasche über eine Drosselstelle mit einer Taschen-Druckmittelquelle und über den zwischen Lagerflächen und Rand verbleibenden Spalt mit einem Ablauf verbunden ist.

Bei dieser Konstruktion wird zwar die Anfangs-Einstellung mit Hilfe der Kolben-Zylinder-Einheiten der Außenlager in üblicher Weise vorgenommen. Die folgende Nachregelung erfolgt aber selbsttätig. Wird nämlich die abzustützende Lagerkraft größer, verringert sich der Spalt und der Druck in der Tasche steigt. Umgekehrt vergrößert sich der Spalt bei einer Absenkung der abzustützenden Lagerkräfte und der Taschendruck sinkt. Dies führt zu unterschiedlichen Volumenströmen. Es ergibt sich ein Arbeitsbereich, der durch einen minimalen und einen maximalen Volumenstrom begrenzt ist, wobei sich die Spaltweite beispielsweise zwischen 10 und 150 µm verändert. Leichte Streckenlaständerungen, wie sie z.B. aus der Druckkorrektur einer Zone entstehen, werden selbsttätig an den Außenlagern berücksichtigt. Erst wenn der beschriebene Bereich vollständig durchlaufen ist, wird im Druckraum der Kolben-Zylinder-Einheit Druckmittel abgelassen oder zugeführt.

Günstig ist es, daß die Stützvorrichtungen durch eine Steuervorrichtung zonenweise druckansteuerbar sind. Bei einer solchen zonenweisen Ansteuerung treten vielfach kleine Druckänderungen an den Stützvorrichtungen auf, die dann völlig selbsttätig in den Außenlagern ausgeglichen werden.

Zweckmäßigerweise ist der Rand von einer Auffangwanne umgeben, von der der Ablauf abgeht. Das zugeführte Druckmittel kann daher im Kreislauf verwendet werden.

Außerdem empfiehlt es sich, daß die Drosselstelle einstellbar ist. Auf diese Weise ist eine Anpassung des Taschendrucks an die örtlichen Gegebenheiten möglich.

Von Vorteil ist es auch, daß die Drosselstelle durch ein zur Taschen-Druckmittelquelle hin öffnenden Rückschlagventil überbrückt ist. Auf diese Weise kann die Tasche bei Betriebsende entlastet werden.

Bei einer bevorzugten Ausführungsform ist dafür gesorgt, daß der Druckraum der Kolben-Zylinder-Einheit über ein Absperrventil mit einer Kolben-Druckmittelquelle verbunden ist. Im Normalbetrieb kann daher der Druckraum der Kolben-Zylinder-Einheit abgesperrt werden, so daß keine Gefahr besteht, daß der Kolben bei der selbsttätigen Nachregelung seine Lage ändert.

Empfehlenswert ist es ferner, daß ein mit dem Druckraum verbindbarer Druckspeicher über ein Wechselventil mit Druck von der Kolben-Druckmittelquelle aufladbar und zu einem Behälter entladbar ist. Hierdurch kann im Druckspeicher ständig ein Druck zur Verfügung gehalten werden, der für eine Nachstellung der Kolben-Zylinder-Einheit geeignet ist.

Die Erfindung wird nachstehend anhand eines in der Zeichnung dargestellten bevorzugten Ausführungsbeispiels näher beschrieben. Hierin zeigen:

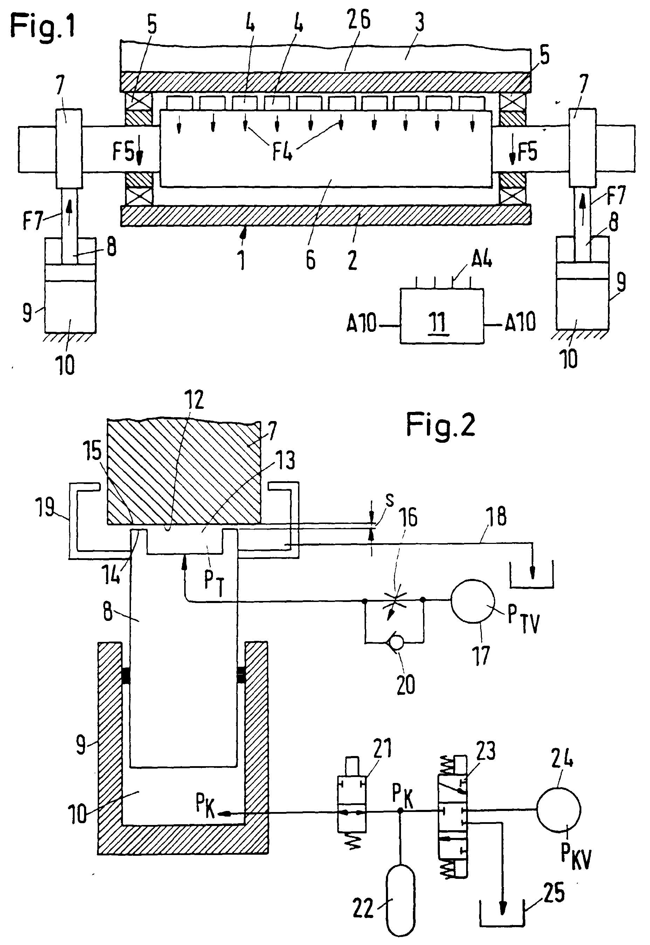

- Fig. 1: eine schematische Darstellung einer erfindungsgemäßen Biegeeinstellwalze und
- Fig. 2: schematisch den Bereich des Außenlagers.

Die veranschaulichte Biegeeinstellwalze 1 weist einen Walzenmantel 2 auf, der mit einer Gegenwalze 3, die beispielsweise gestellfest gelagert ist, zusammenwirkt. Die Gegenwalze kann auch die unterste Mittelwalze eines Walzenstapels sein, dessen Oberwalze am Gestell abgestützt ist. Der Walzenmantel 2 ist über hydrostatische Stützelemente 4 und Innenlager 5 auf einem Träger 6 abgestützt, der den Walzenmantel 2 durchsetzt und drehfest in Außenlagern 7 gehalten ist. Die Außenlager 7 stützen sich auf Stellelementen 8 ab, welche durch Kolben-Zylinder-Einheiten 9, die einen Druckraum 10 aufweisen, nach oben drückbar sind.

Die hydrostatischen Stützvorrichtungen 4 können eine beliebige bekannte Bauform haben, beispielsweise gemäß DE 30 22 491 C1 ausgebildet sein. Eine Steuervorrichtung 11 hat Ausgänge A4, mit denen der Druck in den einzelnen Stützvorrichtungen 4 vorgegeben wird, und Ausgänge A10, mit denen der Druck in den Druckräumen 10 der Kolben-Zylinder-Einheiten 9 vorgegeben wird. Auf diese Weise ergibt sich im Arbeitsspalt 12 zwischen Biegeeinstellwalze 1 und Gegenwalze 3 ein gewünschtes Druckspannungsprofil, wie es sich für die Behandlung einer Materialbahn, beispielsweise einer Papier- oder Textilbahn, als zweckmäßig erwiesen hat. Die Stützvorrichtungen 4 sind vorzugsweise zonengesteuert und werden insbesondere allein oder paarweise mit unterschiedlichen Drücken gespeist.

Damit ein Gleichgewicht aller am Träger 6 angreifenden Kräfte vorhanden ist, muß die Summe der Abstützkräfte F4 der Stützvorrichtungen 4 und der Lagerkräfte F5 der Innenlager 5 gleich der Summe der Außenlagerkräfte F7 sein, wobei letztere je etwa 50 % der Gesamtkräfte der Streckenlast ausmachen.

Erfindungsgemäß ist zwischen dem Außenlager 7 und dem Stellelement 8 eine Lagerfläche 12 vorgesehen, der mindestens eine Tasche 13 mit einem ringsum laufenden Rand 14 gegenüberliegt. Zwischen Rand 14 und Lagerfläche 12 verbleibt ein Spalt 15. Die Tasche 13 ist über eine einstellbare Drosselstelle 16 mit einer Taschen-Druckmittelquelle 17 und über den Spalt 15 mit einem Ablauf 18 verbunden. Sie führt einen Taschendruck P_{T}. Der Ablauf geht von einer Auffangwanne 19 aus, welche den Rand 14 umgibt. Die Drosselstelle 16 ist durch ein Rückschlagventil 20 überbrückt, das in Richtung auf die Taschen-Druckmittelquelle 17 öffnet.

Der Druckraum 10 der Kolben-Zylinder-Einheit 9 ist über ein Absperrventil 21 mit einem Druckspeicher 22 verbunden. Dieser kann über ein Wechselventil 23 wahlweise mit einer Kolben-Druckmittelquelle 24 oder einem Behälter 25 verbunden werden, so daß mit Hilfe dieses Wechselventils 23 ein Kolbendruck P_{K} für den Druckraum 10 vorgegeben werden kann, der von der Steuervorrichtung 11 vorgegeben ist.

Die Taschen-Druckmittelquelle 17 erzeugt einen für das Taschensystem erforderlichen Versorgungsdruck P_{TV}, die Kolben-Druckmittelquelle 24 einen für die Versorgung des Druckraums 10 erforderlichen Versorgungsdruck P_{KV}.

Bei Betriebsaufnahme wird der Kolbendruck P_{K} im Druckraum 10 und daher auch im Druckspeicher 22 mit Hilfe des Wechselventils 23 auf den von der Steuervorrichtung 11 vorgegebenen Wert gebracht. Dann wird das Absperrventil 21 geschlossen, Gleichzeitig werden alle Stützvorrichtungen 4 mit Druckmittel versorgt, um ein vorgegebenes Druckspannungsprofil im Walzenspalt 26 zu erzeugen.

Außerdem wird Druckmittel, wie Öl, von der TaschenDruckmittelquelle 17 über die Drosselstelle 16, die Tasche 13, den Spalt 15 und den Ablauf 18 abgegeben. Hierdurch stellt sich der Taschendruck P_{T} in der Tasche 13 auf einen Wert ein, der eine Lagerkraft ergibt, die gleich derjenigen ist, welche im Druckraum 10 auf das Stellelement 8 wirkt.

Werden nun durch unterschiedliche Kraftgebung an den Stützvorrichtungen 4 kleine Verformungsänderungen an der Walze vorgenommen, aufgrund deren sich die von den Außenlagern 7 auf zunehmenden Kräfte ändern, so ergibt sich eine selbsttätige Druckkorrektur. Eine Zunahme der Lagerkräfte führt zu einer Verkleinerung der Spaltweite s. Der Volumenstrom wird im Spalt 15 stärker als bisher gedrosselt. Der Taschendruck P_{T} steigt an und kompensiert die Drucksteigerung. Sinkt dagegen die Lagerkraft, vergrößert sich die Spaltweite s. Der Taschendruck P_{T} sinkt und es ergibt sich wieder die gewünschte Gleichgewichtslage. Da die Spaltweite sich etwa zwischen 10 und 150 µm ändern kann, ergibt sich ein verhältnismäßig großer Regelbereich, der es in vielen Fällen möglich macht, bei einer Nachkorrektur auf eine Änderung des Kolbendrucks P_{K} zu verzichten. Sollte aber der Grenzbereich der selbsttätigen Korrektur erreicht werden, bringt es keine Schwierigkeiten mit sich, den Kolbendruck P_{K} durch Zufuhr einer kleinen Druckmittelmenge zu erhöhen oder durch Abfuhr einer solchen Druckmittelmenge zu erniedrigen.

In manchen Fällen kann man auch auf das Absperrventil 21 verzichten, wenn nämlich die Reibungskräfte in der Kolben-Zylinder-Einheit 9 so groß sind, daß sie die vom Taschendruck berücksichtigten Druckänderungen übersteigen.

## Patentansprüche

1. Biegeeinstellwalze, mit einem in Außenlagern drehfest gehaltenen Träger, der einen drehbaren Walzenmantel durchsetzt und diesen unter Zwischenschaltung von hydrostatischen Stützvorrichtungen und gegebenenfalls an den Mantelenden angeordneten Innenlagern abstützt, wobei die Außenlager durch die Stellelemente von hydraulischen Kolben-Zylinder-Einheiten in Richtung auf eine Gegenwalze drückbar sind, dadurch gekennzeichnet, daß zwischen Stellelement (8) und Außenlager (7) eine Lagerfläche (12) vorgesehen ist und dieser mindestens eine Tasche (13) mit einem ringsum laufenden Rand (15) gegenüber liegt und daß die Tasche (13) über eine Drosselstelle (16) mit einer Taschen-Druckmittelquelle (17) und über den zwischen Lagerflächen (12) und Rand (14) verbleibenden Spalt (15) mit einem Ablauf (18) verbunden ist.

2. Biegeeinstellwalze nach Anspruch 1, dadurch gekennzeichnet, daß die Stützvorrichtungen 84) durch eine Steuervorrichtung (11) zonenweise druckansteuerbar sind.

3. Biegeeinstellwalze nach Anspruch 1 oder 2, dadurch gekennzeichnet, daß der Rand (14) von einer Auffangwanne (19) umgeben ist, von der der Ablauf (18) abgeht.

4. Biegeeinstellwalze nach einem der Ansprüche 1 bis 3, dadurch gekennzeichnet, daß die Drosselstelle (16) einstellbar ist.

5. Biegeeinstellwalze nach einem der Ansprüche 1 bis 4, dadurch gekennzeichnet, daß die Drosselstelle (16) durch ein zur Taschen-Druckmittelquelle (17) hin öffnenden Rückschlagventil (20) überbrückt ist.

6. Biegeeinstellwalze nach einem der Ansprüche 1 bis 5, dadurch gekennzeichnet, daß der Druckraum (10) der Kolben-Zylinder-Einheit (9) über ein Absperrventil (21) mit einer Kolben-Drucknittelquelle (24) verbunden ist.

7. Biegeeinstellwalze nach Anspruch 6, dadurch gekennzeichnet, daß ein mit dem Druckraum (10) verbindbarer Druckspeicher (22) über ein Wechselventil (23) mit Druck von der Kolben-Druckmittelquelle aufladbar und zu einem Behälter (25) entladbar ist.
